# EUROPÄISCHE PATENTSCHRIFT

(11) **EP 0 518 145 B1**
(45) Veröffentlichungstag und Bekanntmachung des Hinweises auf die Patenterteilung: **11.01.1995**
(21) Anmeldenummer: 92109150.0
(22) Anmeldetag: 30.05.1992
(51) Int. Cl.: B29C 47/92, B29C 47/40, B29B 7/48

(54) **Vorrichtung zum Plastifizieren von Kunststoff**
Apparatus for plastifying plastic material
Dispositif pour la plastification de matière plastique

(30) Priorität: 11.06.1991 DE 4119145
(43) Veröffentlichungstag der Anmeldung: 16.12.1992
(73) Patentinhaber: FRIEDRICH THEYSOHN GmbH, D-30853 Langenhagen (DE)
(72) Erfinder: Nogossek, Alfred, W-3320 Salzgitter 1 (DE)
(74) Vertreter: Döring, Roger, Dipl.-Ing.

(56) Entgegenhaltungen:
- DE-A- 3 407 789
- DE-C- 3 841 729
- GB-A- 2 048 092
- US-A- 3 475 787
- US-A- 4 299 499
- US-A- 4 302 172

## Beschreibung

Die Erfindung bezieht sich auf eine Vorrichtung zum Plastifizieren von Kunststoff, bestehend aus zwei miteinander kämmenden, um ihre Achsen drehbaren Schnecken und aus einem Schneckengehäuse, in dem die beiden Schnecken angeordnet sind, bei welcher im Verlauf der Schnecken mindestens eine Drosselstelle zur stufenlosen Veränderung des Strömungsquerschnitts im Schneckengehäuse angebracht ist und bei welcher im Bereich der Drosselstelle in Öffnungen des Schneckengehäuses Schieberplatten angeordnet sind, die quer zur Achsrichtung der Schnecken verstellbar sind (DE-Z "PLASTVERARBEITER" 41, Jahrgang 1990, Nr. 10, Seite 140).

Derartige Vorrichtungen werden auch als Doppelschnecken-Extruder oder Compoundieranlagen bezeichnet. Im folgenden wird der Einfachheit halber das kürzere Wort "Extruder" verwendet. Sie sind mit zwei Schnecken ausgerüstet, die mit gleicher Drehrichtung oder entgegengesetzt gedreht werden können. Im Verlauf der Schnecken sind bei solchen Extrudern mechanisch stufenlos einstellbare Drosselstellen vorgesehen, durch welche die Strömungsgeschwindigkeit des zu verarbeitenden Materials verändert werden kann. Es ist dadurch eine einfache Anpassung an unterschiedliche Fließeigenschaften und Viskositäten des zu verarbeitenden Materials möglich. Durch die Drosselstelle sind Verweilzeit und Füllgrad und damit der Plastifiziergrad des Materials beeinflußbar.

Der in der eingangs erwähnten DE-Z "PLASTVERARBEITER" beschriebene Extruder hat eine Drosselstelle, die als "Radialdrossel", bezeichnet ist. Die im Schneckengehäuse verstellbaren Schieberplatten verlaufen unter einem Winkel von 90° zur Achsrichtung der Schnecken. Sie sind also relativ zu diesen radial verstellbar und ragen an einer speziell ausgeformten Stelle der Schnecken mehr oder weniger tief in das Schneckengehäuse hinein. Die Schieberplatten erzeugen dadurch im Schneckengehäuse sogenannte "Totwassergebiete", in denen die Schmelze stehen bleibt. Die dadurch gebildeten Rückstände führen zu Verunreinigungen in der Schmelze und damit zu unbrauchbaren Produkten.

Der Erfindung liegt die Aufgabe zugrunde, die eingangs geschilderte Vorrichtung so weiterzubilden, daß eine wirksame Veränderung des Strömungsquerschnitts ohne Bildung von Totwassergebieten möglich ist.

Diese Aufgabe wird gemäß der Erfindung dadurch gelöst,
- daß die Schieberplatten schräg zur Achsrichtung der Schnecken unter einem spitzen Winkel angeordnet und verstellbar sind,
- daß die den Schnecken zugewandte Kante der Schieberplatten parallel zur Achse der Schnecken verläuft,
- daß in dem die Schnecken umgebenden Raum des Schneckengehäuses in Höhe der Drosselstelle im Querschnitt trapezförmige radiale Erweiterungen angebracht sind, deren längere parallele Seiten den Schnecken zugewandt sind und die in die Öffnungen übergehen und
- daß die Schieberplatten um einen der radialen Höhe der Erweiterungen entsprechenden Weg zwischen zwei durch die parallelen Seiten derselben begrenzten Endstellungen verstellbar sind.

Die Erweiterungen des Schneckenraums an der Drosselstelle sind trapezförmig gestaltet, so daß die die Schenkel des Trapezes bildenden Kanten der Erweiterungen beide mit entgegengesetzter Neigung schräg nach außen verlaufen. Diese Form der Erweiterungen stellt sicher, daß für die von den Schnecken geförderte Schmelze keine Vorsprünge oder Hinterschneidungen entstehen. Es sind vielmehr an beiden Enden der Erweiterung das Fließen der Schmelze begünstigende Übergänge vorhanden. Dieser Vorteil bleibt auch dann erhalten, wenn die Schieberplatten zur Verkleinerung des Strömungsquerschnitts in die Erweiterungen hineingefahren werden. Auch die dann in die Erweiterungen hineinragende Kante der Schieberplatten stellt wegen ihres schrägen Verlaufs sicher, daß die Schmelze vollständig vorbei fließen kann. Totwassergebiete können bei dieser Vorrichtung also bei keiner Stellung der Schieberplatten auftreten.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:
Fig. 1 in schematischer Darstellung eine Vorrichtung nach der Erfindung, teilweise im Schnitt.
Fig. 2 einen Schnitt durch Fig. 1 längs der Linie II - II in vergrößerter Darstellung.
Fig. 3 und 4 Einzelheiten der Vorrichtung in weiter vergrößerter Darstellung.

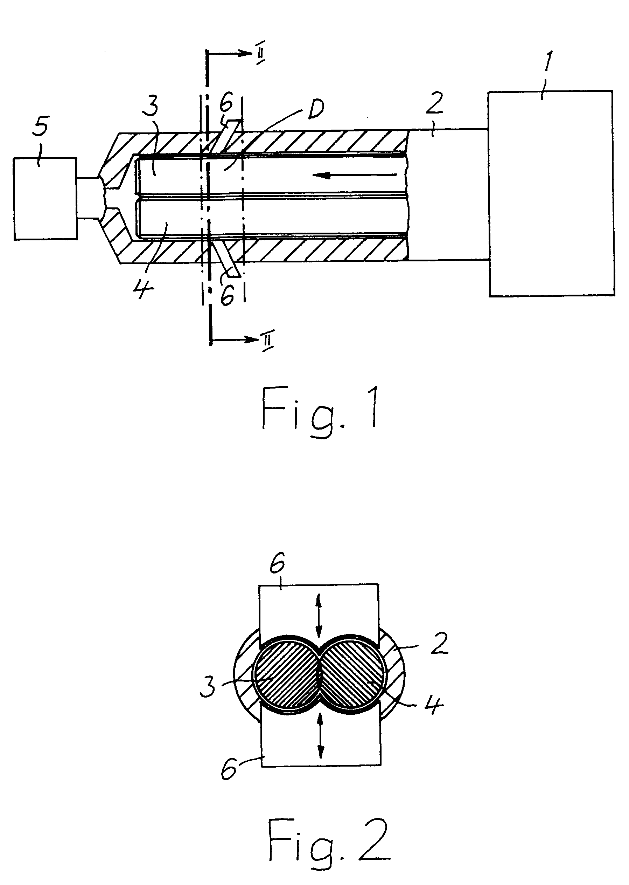

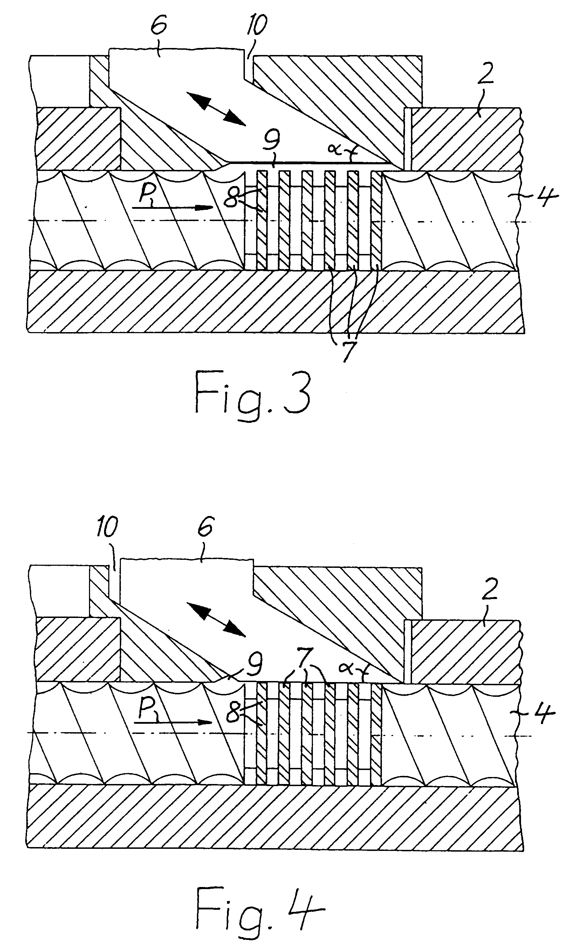

In Fig. 1 ist ein Extruder 1 schematisch dargestellt, in dessen Schneckengehäuse 2 zwei Schnecken 3 und 4 angeordnet sind. Es handelt sich also um einen Doppelschneckenextruder bzw. eine Compoundieranlage. Die Schnecken 3 und 4 können gleichsinnig um ihre Achse gedreht werden, aber auch mit entgegengesetzter Richtung. In Fig. 1 sind nur die für das Verständnis der Erfindung wichtigen Teile eingezeichnet. Zur Bearbeitung von in den Extruder 1 eingefülltem Kunststoff durch die miteinander kämmenden und um ihre Achsen drehenden Schnecken 3 und 4 wird der Kunststoff in Richtung des Pfeiles zum Spritzkopf 5 bewegt. Der Aufbau der Schnecken 3 und 4 mit üblichen Förder- und Mischteilen ist in Fig. 1 nicht genauer dargestellt. Im Verlauf der Schnecken 3 und 4 und im Schneckengehäuse 2 ist eine Drosselstelle D angebracht, die sich zwischen den beiden strichpunktierten Linien in Fig. 1 befindet. Die Drosselstelle D ist aus Fig. 2 im Querschnitt erkennbar. Es sind an der Drosselstelle D im Schneckengehäuse 2 Schieberplatten 6 angeordnet, die schräg zur Achsrichtung der Schnecken 3 und 4 bewegbar sind. In Fig. 2 sind zwei Schieberplatten 6 eingezeichnet, die beide auf beide Schnecken 3 und 4 einwirken. Es können auch mehr als zwei Schieberplatten verwendet werden, die über den Umfang des Schneckengehäuses 2 verteilt sind. Der genauere Aufbau der Drosselstelle D geht aus den Fig. 3 und 4 hervor.

In den Fig. 3 und 4 ist in vergrößerter Darstellung nur ein Abschnitt der Schnecke 4 wiedergegeben. Die gleich aufgebaute Schnecke 3 befindet sich in der Zeichenebene hinter der Schnecke 4 und ist daher nicht zu sehen. An der Drosselstelle D weist die Schnecke 4 im dargestellten Ausführungsbeispiel Drosselscheiben 7 auf, deren Außendurchmesser dem Innendurchmesser des Schneckengehäuses 2 entspricht. Die Drosselscheiben 7 haben in ihren Umfangsflächen über den gesamten Umfang verteilt Vertiefungen 8, die jeweils über die gesamte Breite einer Drosselscheibe 7 verlaufen. Die Vertiefungen 8 können genau axial aber auch schräg zur Achse der Schnecke 4 verlaufen, so wie es in den Fig. 3 und 4 eingezeichnet ist. Die zu fördernde Schmelze wird durch die drehende Schnecke 4 durch die Vertiefungen 8 hindurchgedrückt.

Im Bereich der Drosselscheiben 7 und damit an der Drosselstelle D sind im Schneckengehäuse 2 radial nach außen gerichtete Erweiterungen 9 angebracht. Die Erweiterungen 9 gehen in die Öffnungen 10 des Schneckengehäuses 2 über, in denen die Schieberplatten 6 verstellbar angeordnet sind, so wie es durch den eingezeichneten Doppelpfeil angedeutet ist. Die Schieberplatten 6 sind zwischen zwei Endstellungen verstellbar, von denen die eine in Fig. 3 und die andere in Fig. 4 dargestellt ist.

Die Schieberplatten 6 sind im Schneckengehäuse 2 schräg angeordnet, und zwar unter einem spitzen Winkel α, der sich in der dargestellten Ausführungsform entgegen zur Transportrichtung der Schnecke 4 öffnet, die in den Fig. 3 und 4 durch den Pfeil P angedeutet ist. Der Winkel α, unter dem die Schieberplatten 6 gegenüber der Achsrichtung der Schnecken 3 und 4 verläuft, könnte sich auch in Transportrichtung öffnen. Er soll zwischen 30° und 80° liegen. Die Schieberplatten 6 sind, wie bereits weiter oben erwähnt, in den Öffnungen 10 des Schneckengehäuses 2 verstellbar angeordnet. Ihre der Schnecke 4 zugewandte Kante verläuft parallel zur Achse derselben. In der einen Endstellung der Schieberplatten 6 liegt diese Kante an der äußeren Begrenzung der Erweiterungen 9, während sie sich in der anderen Endstellung an deren innerer Begrenzung befindet, die mit der Begrenzung des Schneckenraums übereinstimmt. Dazwischen ist jede beliebige Zwischenstellung der Schieberplatten 6 möglich.

Die Erweiterungen 9 haben einen trapezförmigen Querschnitt. Die beiden Schenkel dieses Trapezes verlaufen also mit entgegengesetzter Richtung schräg nach außen. Das ist deutlich aus Fig. 3 zu erkennen. Die von der Schnecke 4 geförderte Schmelze kann also in den Erweiterungen 9 ohne Hinterschneidung oder Vorsprung geführt werden, wobei sie gemäß Fig. 3 durch die untere Kante der Schieberplatten 6 begrenzt wird. In bevorzugter Ausführungsform haben die Erweiterungen 9 die Form eines gleichschenkligen Trapezes. Die beiden seitlichen Schenkel verlaufen dann unter dem gleichen Winkel schräg zu den beiden parallelen Seiten der Erweiterungen 9, allerdings entgegengesetzt gerichtet.

Bei dem relativ großen Strömungsquerschnitt in der in Fig. 3 dargestellten Endstellung der Schieberplatten 6 wird die Strömung der zu fördernde Schmelze im Drosselbereich D nicht wesentlich beeinträchtigt. In der zweiten Endstellung der Schieberplatten 6 gemäß Fig. 4 hingegen ist eine Verengung des Strömungsquerschnitts gegeben. Das Material ist jetzt gezwungen, durch die Vertiefungen 8 der Drosselscheiben 7 zu fließen. Da die in der zweiten Endstellung in die Erweiterungen 9 hineinragende Kante der Schieberplatten 6 ebenfalls schräg verläuft, können auch dann keine störenden Totwassergebiete für die Fließbewegung der Schmelze entstehen.

## Patentansprüche

1. Vorrichtung zum Plastifizieren von Kunststoff, bestehend aus zwei miteinander kämmenden, um ihre Achse drehbaren Schnecken und aus einem Schneckengehäuse, in dem die beiden Schnecken angeordnet sind, bei welcher im Verlauf der Schnecken mindestens eine Drosselstelle zur stufenlosen Veränderung des Strömungsquerschnitts im Schneckengehäuse angebracht ist und bei welcher im Bereich der Drosselstelle in Öffnungen des Schneckengehäuses Schieberplatten angeordnet sind, die quer zur Achsrichtung der Schnecken verstellbar sind,
dadurch gekennzeichnet,
- daß die Schieberplatten (6) schräg zur Achsrichtung der Schnecken (3,4) unter einem spitzen Winkel angeordnet und verstellbar sind,
- daß die den Schnecken (3,4) zugewandte Kante der Schieberplatten (6) parallel zur Achse der Schnecken (3,4) verläuft,
- daß in dem die Schnecken (3,4) umgebenden Raum des Schneckengehäuses (2) in Höhe der Drosselstelle (D) im Querschnitt trapezförmige radiale Erweiterungen (9) angebracht sind, deren längere parallele Seiten den Schnecken (3,4) zugewandt sind und die in die Öffnungen (10) übergehen und
- daß die Schieberplatten (6) um einen der radialen Höhe der Erweiterungen (9) entsprechenden Weg zwischen zwei durch die parallelen Seiten derselben begrenzten Endstellungen verstellbar sind.

2. Vorrichtung nach Anspruch 1, dadurch gekennzeichnet, daß der Querschnitt der Erweiterungen (9) die Form eines gleichschenkligen Trapezes hat.

3. Vorrichtung nach Anspruch 1 oder 2, dadurch gekenzeichnet, daß der spitze Winkel (α) sich entgegengesetzt zur Transportrichtung der Schnecken (3,4) öffnet.

4. Vorrichtung nach Anspruch 1 oder 2, dadurch gekennzeichnet, daß der spitze Winkel (α) sich in Transportrichtung der Schnecken (3,4) öffnet.

5. Vorrichtung nach einem der Ansprüche 1 bis 4, dadurch gekennzeichnet, daß der spitze Winkel (α) zwischen 30° und 80° liegt.

## Claims

1. Device for plasticating plastic, consisting of two intermeshing screws which can rotate about their axes and of a screw housing in which the two screws are arranged, in which device at least one throttle point is disposed in the path of the screws to continuously vary the flow cross section in the screw housing, and in which slide plates are arranged in openings in the screw housing in the region of the throttle point, which plates can be displaced transversely to the axial direction of the screws,
characterised in
- that the slide plates (6) are arranged and can be displaced at an acute angle obliquely to the axial direction of the screws (3, 4),
- that the edge of the slide plates (6) which faces the screws (3, 4) extends parallel to the axis of the screws (3, 4),
- that radial widened portions (9), which have a trapezium-shaped cross section, are disposed on a level with the throttle point (D) in the space of the screw housing (2) surrounding the screws (3, 4), the longer parallel sides of which portions face the screws (3, 4) and which pass into the openings (10), and
- that the slide plates (6) can be displaced by a distance which corresponds to the radial height of the widened portions (9) between two end positions which are defined by the parallel sides of the latter.

2. Device according to claim 1, characterised in that the cross section of the widened portions (9) is in the shape of an equilateral trapezium.

3. Device according to claim 1 or 2, characterised in that the acute angle (α) opens in the direction opposite to the conveying direction of the screws (3, 4).

4. Device according to claim 1 or 2, characterised in that the acute angle (α) opens in the conveying direction of the screws (3, 4).

5. Device according to any one of claims 1 to 4, characterised in that the acute angle (α) is between 30° and 80°.

## Revendications

1. Dispositif pour plastifier la matière plastique, se composant de deux vis sans fin rotatives autour de leur axe et venant en prise l'une avec l'autre et d'un carter de vis dans lequel sont disposées les deux vis sans fin, dispositif pour lequel est formé dans le tracé des vis sans fin au moins un point d'étranglement en vue d'une modification progressive de la coupe transversale d'écoulement dans le carter de vis, et dans lequel dans la zone d'étranglement, sont disposées, dans des ouvertures du carter de vis, des plaques coulissantes qui sont réglables transversalement à la direction axiale des vis,
caractérisé
- en ce que les plaques coulissantes (6) sont disposées de manière inclinée par rapport à la direction axiale des vis sans fin (3, 4) en formant un angle aigu et en ce qu'elles sont réglables,
- en ce que le bord des plaques coulissantes (6), tourné vers les vis sans fin (3, 4), s'étend parallèlement a l'axe des vis sans fin (3, 4),
- en ce que dans l'enceinte entourant les vis sans fin (3, 4) du carter de vis (2), sont prévus, à hauteur du point d'étranglement (D), des élargissements radiaux (9) de section transversale trapézoïdale, dont les côtés parallèles les plus longs sont tournés vers les vis sans fin (3, 4) et se poursuivent dans les ouvertures (10) et
- en ce que les plaques coulissantes (6) sont réglables sur une trajectoire correspondant à la hauteur radiale des élargissements (9) entre deux positions de fin de course limitées par les côtés parallèles de ces derniers.

2. Dispositif selon la revendication 1, caractérisé en ce que la section transversale des élargissements (9) a la forme d'un trapèze isocèle.

3. Dispositif selon la revendication 1 ou 2, caractérisé en ce que l'angle aigu (α) s'ouvre dans le sens opposé à celui du transport des vis sans fin (3, 4).

4. Dispositif selon la revendication 1 ou 2, caractérisé en ce que l'angle aigu (α) s'ouvre dans le sens de transport des vis sans fin (3, 4).

5. Dispositif selon l'une des revendications 1 à 4, caractérisé en ce que l'angle aigu (α) se situe entre 30° et 80°.
